# EUROPEAN PATENT APPLICATION

(11) **EP 4 436 224 A1**
(43) Date of publication of application: **25.09.2024**
(21) Application number: 22918529.3
(22) Date of filing: 30.12.2022
(51) Int. Cl.: H04W 4/50

(54) **INFORMATION TRANSMISSION METHOD, APPARATUS, AND MEDIUM**

(30) Priority: 06.01.2022 CN 202210010802; 22.12.2022 CN 202211656015
(71) Applicant: Datang Mobile Communications Equipment Co., Ltd., Beijing 100085 (CN)
(72) Inventor: ZHANG, Xiangdong, Beijing 100085 (CN); SUN, Jiancheng, Beijing 100085 (CN)
(74) Representative: Cabinet Nony
(86) International application number: PCT/CN2022/144269
(87) International publication number: WO 2023/131088

(57) **Abstract**

The present application provides an information transmission method, an apparatus, and a medium, which avoid failure of a user equipment to camp on a cell and also reduce power consumption waste. A user equipment receives a service start time of a first satellite cell, and determines the service start time of the first satellite cell as a service start time of a next satellite cell that provides a service for the user equipment; or the user equipment receives first satellite cell list information, which comprises a service start time of at least one satellite cell and may further comprise coverage area information of at least one satellite cell, acquires from the first satellite cell list information a satellite cell capable of covering the position of the user equipment, and takes the service start time of the satellite cell as a service start time of the next satellite cell. Different execution operations are determined by means of received content, so that unnecessary signaling overheads can be reduced and resource utilization efficiency is improved.

## Description

### CROSS-REFERENCE TO RELATED APPLICATIONS

This application claims priority to Chinese Patent Application No. 202210010802.5, entitled "INFORMATION TRANSMISSION METHOD AND APPARATUS, AND MEDIUM" and filed with the CNIPA on January 6, 2022, the entire contents of which are incorporated herein by reference; and this application claims priority to Chinese Patent Application No. 202211656015.4, entitled "INFORMATION TRANSMISSION METHOD AND APPARATUS, AND MEDIUM" and filed with the CNIPA on December 22, 2022, the entire contents of which are incorporated herein by reference.

### TECHNICAL FIELD

The present application relates to the technical field of communications, and in particular, to an information transmission method, an information transmission apparatus, and a medium.

### BACKGROUND

In order to achieve global coverage, low-orbit satellite communication system generally requires a large number of satellites to form a constellation system, where the entire constellation system provides services for user equipment, UE. Since satellites are mobile, in order to prevent a waste of power caused by invalid searches for satellite cells by the UE, the UE may be provided with a service start moment of an incoming satellite cell and a service end time of a current satellite cell. However, different satellites may have different coverage areas on the ground. As a result, after the service start moment of the incoming satellite cell is received by the UE, the incoming satellite cell may fail to cover the position of the UE at the corresponding service start moment of the incoming satellite cell, causing the UE to fail to camp on the incoming satellite cell.

### SUMMARY

The present application provides information transmission method and apparatus, and a medium, which avoid failure of a UE to camp on a cell and also reduce power consumption waste.

In a first aspect, an information transmission method is provided in an embodiment of the present application, applied to a UE, the UE being located within a service area of a second satellite cell, the method including:
receiving first information, the first information including a service start moment of a first satellite cell or including first satellite cell list information, the first satellite cell list information including a service start moment of at least one satellite cell; and
determining, according to the first information, a service start moment of an incoming satellite cell that provides service for the UE.

In the above solution, the service start moment of the incoming satellite cell that provides service for the UE is determined according to received information content, and different information contents determine different service start moments. That is, under different circumstances, the service start moment is determined in different manners, so that unnecessary signaling overheads can be reduced and resource utilization is improved.

In a possible implementation, when the first information includes the service start moment of the first satellite cell, the first satellite cell starts to provide service for the UE within the service area of the second satellite cell from the service start moment. When the first information includes the first satellite cell list information, at least one satellite cell in the first satellite cell list information starts to provide service for at least one UE within the service area of the second satellite cell at a corresponding service start moment.

It should be understood that the service area of the second satellite cell in the embodiments of the present application is within a ground coverage area of a currently provided service. For example, a current service area of the second satellite cell is area A1, and if the second satellite cell moves at a next moment, a coverage area of the second satellite cell becomes area B1. The UE receives the first information when the current service area of the second satellite cell is area A1. Then, "the first satellite cell starts to provide service for the UE within the service area of the second satellite cell at the service start moment" may be understood as that the first satellite cell starts to provide service for the UE within area A1 at the service start moment. In other words, if a moment when the second satellite cell is in area A1 is a current moment, the service start moment of the first satellite cell is a future moment after the current moment.

"The first satellite cell starts to provide service for the UE within the service area of the second satellite cell at the service start moment" may alternatively be understood as that the coverage area of the first satellite cell at the service start moment can cover a current service area of the second satellite cell.

In a possible implementation, the first information includes the service start moment of the first satellite cell, and the determining, according to the first information, the service start moment of the incoming satellite cell that provides service for the UE includes: determining the service start moment of the first satellite cell to be the service start moment of the incoming satellite cell that provides service for the UE.

In a possible implementation, the first information includes satellite cell list information, the satellite cell list further includes coverage area information of the at least one satellite cell at a corresponding service start moment, and the determining, according to the first information, the service start moment of the incoming satellite cell that provides service for the UE includes: determining, from the first satellite cell list information according to position information of the UE and the coverage area information of the at least one satellite cell at the corresponding service start moment, a third satellite cell capable of covering a position of the UE; and determining a service start moment corresponding to the third satellite cell to be the service start moment of the incoming satellite cell that provides service for the UE.

In a possible implementation, the first satellite cell is a satellite cell, in a satellite communication system to which the UE belongs, capable of earliestly providing the service for the UE.

In the above implementation, the satellite cell capable of earliestly providing service is selected and sent to the UE, so that the time during which the UE is subjected to communication interruption can be reduced even in a discontinuous communication scenario.

In a possible implementation, prior to the determining the service start moment corresponding to the third satellite cell to be the service start moment of the incoming satellite cell that provides service for the UE, the method further includes: receiving a coverage area change indication, the coverage area change indication being used to indicate that a coverage area of the incoming satellite cell in a satellite communication system to which the UE belongs is different from the service area of the second satellite cell.

In the above implementation, the coverage area change indication is provided, so that the UE directly determines the service start moment of the incoming satellite cell according to satellite cell list information.

In a possible implementation, the first information includes the service start moment of the first satellite cell, and the method further includes:
receiving second satellite cell list information, the second satellite cell list information including a service start moment of at least one satellite cell and coverage area information of the at least one satellite cell; where a coverage area of the at least one satellite cell included in the second satellite cell list information overlaps with the service area of the second satellite cell, and the first satellite cell list information includes at least one satellite cell whose service start moment is earlier than the service start moment of the first satellite cell; and
selecting, in response to determining that the service start moment of the first satellite cell does not meet a camp-on moment requirement, a fourth satellite cell from a second serving cell list as the incoming satellite cell that provides service for the UE; wherein a coverage area of the fourth satellite cell at a service start moment includes the position of the UE, and the service start moment of the fourth satellite cell is earlier than the service start moment of the first satellite cell.

Through the above implementation, the UE may determine the incoming satellite cell and the service start moment according to the camp-on moment requirement.

In a possible implementation, the method further includes:
receiving coverage area description information;
where the coverage area description information includes a coverage start moment corresponding to at least one coverage area and coverage information of the at least one coverage area at the corresponding coverage start moment; and
determining, according to the coverage area description information, a second coverage area capable of covering the position of the UE and a coverage start moment of the second coverage area.

In a possible implementation, a coverage range of any coverage area included in the coverage area description information overlaps with the current service area of the second satellite cell.

In a possible implementation, the coverage information includes reference point information, or includes reference point information and a coverage radius.

In a second aspect, the present application provides an information transmission method, applied to a network device, including:
determining first information, the first information including a service moment time of a first satellite cell or including first satellite cell list information, the first satellite cell list information including a service start moment of at least one satellite cell; and
sending the first information to a UE within a current service area of a second satellite cell.

In the above solution, different information contents are broadcast to the UE according to acquired information content, so that unnecessary signaling overheads can be reduced and resource utilization efficiency is improved.

In a possible implementation, a first coverage area of the first satellite cell covers at least the service area of the second satellite cell, the first coverage area being an area that the first satellite cell starts to cover from the service start moment; or the first satellite cell list information further includes coverage area information of the at least one satellite cell at a corresponding service start moment, and a service area of the at least one satellite cell included in the first satellite cell list information overlaps with the current service area of the second satellite cell.

In the above solution, content of the first information is broadcast through acquired content of the first information, that is, a relationship between a coverage area of a currently serving satellite cell and a coverage area of the determined incoming satellite cell, so that unnecessary signaling overheads can be reduced and resource utilization efficiency is improved. The UE may parse the broadcast content according to the broadcast content and its own requirement, reducing unnecessary operations, thereby reducing power consumption of the UE.

In a possible implementation, the first satellite cell is a satellite cell, in a satellite communication system to which the network device belongs, capable of earliestly providing service for the UE.

In the above implementation, the satellite cell capable of earliestly providing service is selected and broadcast to the UE, so that the time during which the UE is subjected to communication interruption can be reduced even in a discontinuous communication scenario.

In a possible implementation, the first information includes the first satellite cell list information, and the method further includes: broadcasting a coverage area change indication to the UE; the coverage area change indication being used to indicate that a coverage area of an incoming satellite cell of the second satellite cell in a satellite communication system to which the network device belongs is different from the service area of the second satellite cell.

In the above implementation, the coverage area change indication is provided, so that the UE directly determines the service start moment of the incoming satellite cell according to the satellite cell list information.

In a possible implementation, the first information includes the first satellite cell list information, and the method further includes:
broadcasting coverage area description information to the UE, the coverage area description information including a coverage start moment corresponding to at least one coverage area and coverage information of the at least one coverage area at a corresponding coverage start moment.

Through the above implementation, the UE can know when there is a coverage area or satellite cell that can provide service for the UE, thereby reducing unnecessary searches for satellite cells and reducing a waste of resources.

In a possible implementation, a coverage range of any coverage area included in the coverage area description information overlaps with the current service area of the second satellite cell.

In a possible implementation, the coverage information includes reference point information and/or a coverage radius.

In a possible implementation, the first information includes the service start moment of the first satellite cell, and the method further includes:
sending second satellite cell list information to the UE within the current service area of the second satellite cell;where the second satellite cell list information includes a service start moment of at least one satellite cell and coverage area information of the at least one satellite cell; a coverage area of the at least one satellite cell included in the first satellite cell list information overlaps with the service area of the second satellite cell; and the second satellite cell list information includes at least one satellite cell whose service start moment is earlier than the service start moment of the first satellite cell.

Through the above implementation, the UE may determine the incoming satellite cell and the service start moment according to the camp-on moment requirement.

In a possible implementation, the sending the first information to the UE within the current service area of the second satellite cell includes:
sending a first message to the UE within the service area of the second satellite cell, a first field in the first message carrying the service start moment of the first satellite cell; or
sending a first message to the UE within the service area of the second satellite cell, a first field in the first message carrying the first satellite cell list information.

In the above implementation, the first satellite cell list and the service start moment of the first satellite cell reuse a same field of a same message. It should be understood that the first satellite cell list information and the service start moment of the first satellite cell may not be sent at the same time. In some cases, a first satellite cell list is required to be sent, and the first satellite cell list is sent through the first field. In some other cases, when the service start moment of the first satellite cell is required to be sent, the service start moment of the first satellite cell is sent through the first field.

In a possible implementation, the sending the first information to the UE within the current service area of the second satellite cell includes:
sending a second message to the UE within the service area of the second satellite cell, a second field in the second message carrying the service start moment of the first satellite cell; or
sending a second message to the UE within the service area of the second satellite cell, a third field in the second message carrying the first satellite cell list information.

In the above implementation, the first satellite cell list and the service start moment of the first satellite cell are sent through different fields of a same message. In some cases, the first satellite cell list is required to be sent, and the first satellite cell list is sent through the third field. In some other cases, when the service start moment of the first satellite cell is required to be sent, the service start moment of the first satellite cell is sent through the second field.

In a third aspect, a UE is provided in an embodiment of the present application. The UE is located within a current service area of a second satellite cell, and the apparatus includes a transceiver and a processor.

The processor is configured to: receive first information through the transceiver, the first information including a service start moment of a first satellite cell or including first satellite cell list information, the first satellite cell list information including a service start moment of at least one satellite cell; and determine, according to the first information, a service start moment of an incoming satellite cell that provides service for the UE.

In a possible implementation, the first information includes the service start moment of the first satellite cell, and the processor is specifically configured to:
determine the service start moment of the first satellite cell to be the service start moment of the incoming satellite cell that provides service for the UE.

In a possible implementation, the first information includes satellite cell list information, the first satellite cell list further includes coverage area information of the at least one satellite cell at a corresponding service start moment, and the processor is specifically configured to:
determine, from the first satellite cell list information according to position information of the UE and the coverage area information of the at least one satellite cell at the corresponding service start moment, a third satellite cell capable of covering a position of the UE; and
determine a service start moment corresponding to the third satellite cell to be the service start moment of the incoming satellite cell that provides service for the UE.

In a possible implementation, the first satellite cell is a satellite cell, in a satellite communication system to which the UE belongs, capable of earliestly providing service for the UE.

In a possible implementation, the processor is further configured to receive, prior to determining the service start moment corresponding to the third satellite cell to be the service start moment of the incoming satellite cell that provides service for the UE, a coverage area change indication through the transceiver, the coverage area change indication being used to indicate that a coverage area of the incoming satellite cell in a satellite communication system to which the UE belongs is different from the service area of the second satellite cell.

In a possible implementation, the processor is specifically configured to:
receive a first message through the transceiver, and acquire the first information from a first field of the first message.

In a possible implementation, the processor is specifically configured to:
receive a second message through the transceiver, and acquire the service start moment of the first satellite cell from a second field of the second message; or
receive a second message through the transceiver, and acquire the first satellite cell list information from a second field of the second message.

In a possible implementation, the first information includes the service start moment of the first satellite cell, and the transceiver is further configured to receive second satellite cell list information, the second satellite cell list information including a service start moment of at least one satellite cell and coverage area information of the at least one satellite cell; where a coverage area of the at least one satellite cell included in the second satellite cell list information overlaps with the service area of the second satellite cell, and the first satellite cell list information includes at least one satellite cell whose service start moment is earlier than the service start moment of the first satellite cell; and
the processor is further configured to select, in response to determining that the service start moment of the first satellite cell does not meet a camp-on moment requirement, a fourth satellite cell from the second serving cell list as the incoming satellite cell that provides service for the UE;
where a coverage area of the fourth satellite cell at a service start moment includes the position of the UE, and the service start moment of the fourth satellite cell is earlier than the service start moment of the first satellite cell.

In a fourth aspect, a network device is provided according to an embodiment of the present application, including a transceiver and a processor;
the processor is configured to:
determine first information, the first information including a service start moment of a first satellite cell or including first satellite cell list information, the first satellite cell list information including a service start moment of at least one satellite cell; and
send, through the transceiver, the first information to a UE within a current service area of a second satellite cell.

In a possible implementation, a first coverage area of the first satellite cell covers at least the service area of the second satellite cell, the first coverage area being an area that the first satellite cell starts to cover from the service start moment; or
the first satellite cell list information further includes coverage area information of the at least one satellite cell at a corresponding service start moment, and a service area of the at least one satellite cell included in the first satellite cell list information overlaps with the current service area of the second satellite cell.

In a possible implementation, the first satellite cell is a satellite cell, in a satellite communication system to which the network device belongs, capable of earliestly providing service for the UE.

In a possible implementation, the first information includes the first satellite cell list information, and the processor is further configured to control the transceiver to broadcast a coverage area change indication to the UE; the coverage area change indication being used to indicate that a coverage area of an incoming satellite cell in a satellite communication system to which the network device belongs is different from the service area of the second satellite cell.

In a possible implementation, the processor is specifically configured to:
send, through the transceiver, a first message to the UE within the service area of the second satellite cell, a first field in the first message carrying the service start moment of the first satellite cell; or
send, through the transceiver, a first message to the UE within the service area of the second satellite cell, a first field in the first message carrying the first satellite cell list information.

In a possible implementation, the processor is specifically configured to:
send, through the transceiver, a second message to the UE within the service area of the second satellite cell, a second field in the second message carrying the service start moment of the first satellite cell; or
send, through the transceiver, a second message to the UE within the service area of the second satellite cell, a third field in the second message carrying the first satellite cell list information.

In a possible implementation, the first information includes the service start moment of the first satellite cell, and the processor is further configured to:
send, through the transceiver, second satellite cell list information to the UE within the current service area of the second satellite cell; where the second satellite cell list information includes a service start moment of at least one satellite cell and coverage area information of the at least one satellite cell; a coverage area of the at least one satellite cell included in the first satellite cell list information overlaps with the service area of the second satellite cell; and the first satellite cell list information includes at least one satellite cell whose service start moment is earlier than the service start moment of the first satellite cell.

In a fifth aspect, the present application provides an information transmission apparatus, applied to a UE located within a service area of a second satellite cell, the apparatus including:
a receiving unit, configured to receive first information, the first information including a service start moment of a first satellite cell or including first satellite cell list information, the first satellite cell list information including a service start moment of at least one satellite cell; and
a processing unit, configured to determine, according to the first information, a service start moment of an incoming satellite cell that provides service for the UE.

In a sixth aspect, the present application provides an information transmission apparatus, applied to a network device, including:
a determination unit, configured to determine first information, the first information including a service start moment of a first satellite cell or including first satellite cell list information, the first satellite cell list information including a service start moment of at least one satellite cell; and
a sending unit, configured to send the first information to a UE within a current service area of a second satellite cell.

In a seventh aspect, the present application provides a computer-readable storage medium, storing computer instructions thereon, the computer instructions, when executed by a processor, implementing the method in any one of the implementations in the first aspect.

In an eighth aspect, the present application provides a computer-readable storage medium, storing computer instructions thereon, the computer instructions, when executed by a processor, implementing the method in any one of the implementations in the second aspect.

In a ninth aspect, a computer program product is provided in an embodiment of the present application. The computer program product includes computer program code, and when the computer program code is run, the method performed by the network device in the first aspect is executed, or the method performed by the UE in the second aspect is executed.

Beneficial effects of the above second to ninth aspects may be obtained with reference to the relevant description about the first aspect, which are not described in detail below.

### BRIEF DESCRIPTION OF THE DRAWINGS

In order to more clearly illustrate the embodiments of the present application or the technical solutions in the prior art, the accompanying drawings required to be used in the description of the embodiments or the prior art will be briefly introduced below.
FIG. 1 is a schematic architectural diagram of a satellite communication system according to an embodiment of the present application;
FIG. 2 is a schematic diagram of an Earth-fixed satellite and an Earth-moving satellite according to an embodiment of the present application;
FIG. 3 is a schematic diagram of coverage of satellites according to an embodiment of the present application;
FIG. 4 is another schematic diagram of coverage of satellites according to an embodiment of the present application;
FIG. 5 is yet another schematic diagram of coverage of satellites according to an embodiment of the present application;
FIG. 6 is a schematic flowchart of an information transmission method according to an embodiment of the present application;
FIG. 7 is another schematic flowchart of an information transmission method according to an embodiment of the present application;
FIG. 8 is yet another schematic flowchart of an information transmission method according to an embodiment of the present application;
FIG. 9 is still another schematic flowchart of an information transmission method according to an embodiment of the present application;
FIG. 10 is a schematic structural diagram of an information transmission apparatus according to an embodiment of the present application;
FIG. 11 is another schematic structural diagram of an information transmission apparatus according to an embodiment of the present application;
FIG. 12 is a schematic structural diagram of a network device according to an embodiment of the present application; and
FIG. 13 is a schematic structural diagram of a UE according to an embodiment of the present application.

### DETAILED DESCRIPTION OF THE EMBODIMENTS

In order to make the objectives, technical solutions, and advantages of the present application clearer, the present application is further described in detail below in conjunction with the accompanying drawings. Obviously, described embodiments are only some of rather than all of the embodiments of the present application. Based on the embodiments in the present application, all other embodiments obtained by those of ordinary skill in the art without creative efforts fall within the scope of protection of the present application.

It is to be noted that terms such as "first" and "second" in the embodiments of the present application are intended to distinguish similar objects, but are not intended to describe a specific sequence or precedence order. The term "and/or" in the embodiments of the present application is merely an association relationship describing associated objects, indicating that three relationships may exist. For example, A and/or B indicates that there are three cases of A alone, A and B together, and B alone. The character "/" generally means that associated objects before and after it are in an "or" relationship.

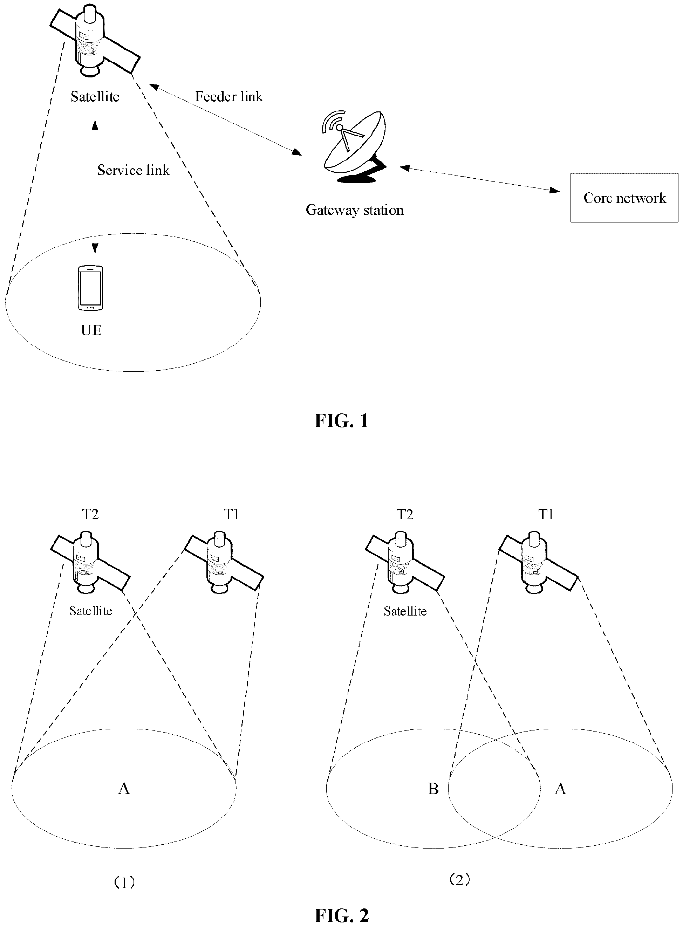

Reference is made to FIG. 1, which is a schematic architectural diagram of a possible satellite communication system. The satellite communication system includes a user equipment, UE, a satellite cell, a gateway station, a core network, CN, and the like. The UE may establish a service link with the satellite cell. A feeder link is established between a satellite and the gateway station. The satellite cell provides a service to a UE within a coverage area of the satellite cell. The satellite cell is mainly configured for communication between the UE and the gateway station. There are two operating modes for the satellite. A first operating mode is a transparent transmission and forwarding mode. In the transparent transmission and forwarding mode, the satellite is configured only to transparently forward communication data between the UE and the gateway station, and does not process the communication data. It may be understood that the satellite performs operations such as frequency conversion and wireless signal amplification on uplink/downlink signals, but does not perform encoding or decoding. In this case, the satellite functions like a radio frequency relay. A second operating mode is a regenerative communication mode. In this case, the satellite may detect information carried by a received signal and perform processing and forwarding, which is equivalent to completing a function of a base station. That is, the satellite may perform functions such as frequency conversion, wireless signal amplification, encoding/modulation, and demodulation/decoding for the uplink/downlink signals. In other words, the satellite may have all or some of the functions of the base station and may regenerate communication signals.

The satellite communication system may be established based on a communication system; it may be established based on a 4th generation, 4G, mobile communication system (e.g., long term evolution, LTE, or advanced long term evolution, LTE-A), a 3rd generation partnership project, 3GPP, related cellular system, a 5th generation, 5G, mobile communication system, and subsequent evolved communication systems. Here, 5G may also be referred to as new radio, NR.

In the embodiments of the present application, the gateway station may also be referred to as a gateway, or the like. The gateway station may be arranged separately from a network device such as a gNB in 5G or an eNB in LTE, or may be integrated with a gNB, an eNB, or the like.

The UE as referred to in the embodiments of the present application may refer to a device that provides voice and/or data connectivity for a user, a handheld device with a wireless connection function, or other processing devices connected to a wireless modem. The UE may also be referred to as a terminal device. A wireless terminal device may communicate with one or more core networks, CNs, via a radio access network, RAN. The wireless terminal device may be a mobile terminal device such as a mobile phone (also called a "cellular" phone), and may be a computer with a mobile terminal device, which may be, for example, a portable, pocket-sized, handheld, computer-built-in or vehicle-mounted mobile apparatus; the mobile terminal device or the computer with the mobile terminal device exchange voice and/or data with the RAN. For example, the wireless terminal device may be a device such as a personal communication service, PCS, phone, a cordless telephone, a session initiation protocol, SIP, phone, a wireless local loop, WLL, station, or a personal digital assistant, PDA. The wireless terminal device may also be referred to as a system, a subscriber unit, a subscriber station, a mobile station, a mobile console, a remote station, an access point, a remote terminal, an access terminal, a user terminal, a user agent, or a user device, which is not limited in the embodiments of the present application.

Satellite cells are classified into two categories: Earth-fixed satellite and Earth-moving satellite. The Earth-fixed satellite means that within a certain period of time, a ground coverage area of a serving cell of the satellite does not change with movement of the satellite. That is, the satellite adopts a "gaze" mode. The satellite is moving, but within a period of time, the satellite seems to "gaze" at a certain area on the ground. Referring to (1) in FIG. 2, as the satellite moves from moment T1 to moment T2, the ground coverage area of the satellite is always A, and T1 and T2 are generally at a short interval. The Earth-moving satellite means that the ground coverage area of the serving cell of the satellite changes with the movement of the satellite. Referring to (2) in FIG. 2, the coverage area of the satellite is A at moment T1 and B at moment T2.

As described in the Background, the current satellite cell provides the service start moment of the incoming satellite cell and the service end moment of the current satellite cell to the UE within the coverage area of the current satellite cell. A satellite cell to camp on may be selected by the UE based on the service start moment of the incoming satellite cell. Especially for a discontinuous coverage scenario, the UE is enabled to acquire the service start moment of the incoming satellite cell from the current satellite cell, so that the UE can camp on or access the incoming satellite cell according to an expected moment, avoiding invalid cell searches and a waste of power. Due to mobility of the satellite, in some scenarios, a coverage area of the incoming satellite cell is not necessarily the same as the coverage area of the current satellite cell. That is, the coverage area of the incoming satellite cell may not cover all UEs in the coverage area of the current satellite cell, which may cause UE(s) not covered by the coverage area of the incoming satellite cell to fail to camp on the incoming satellite cell.

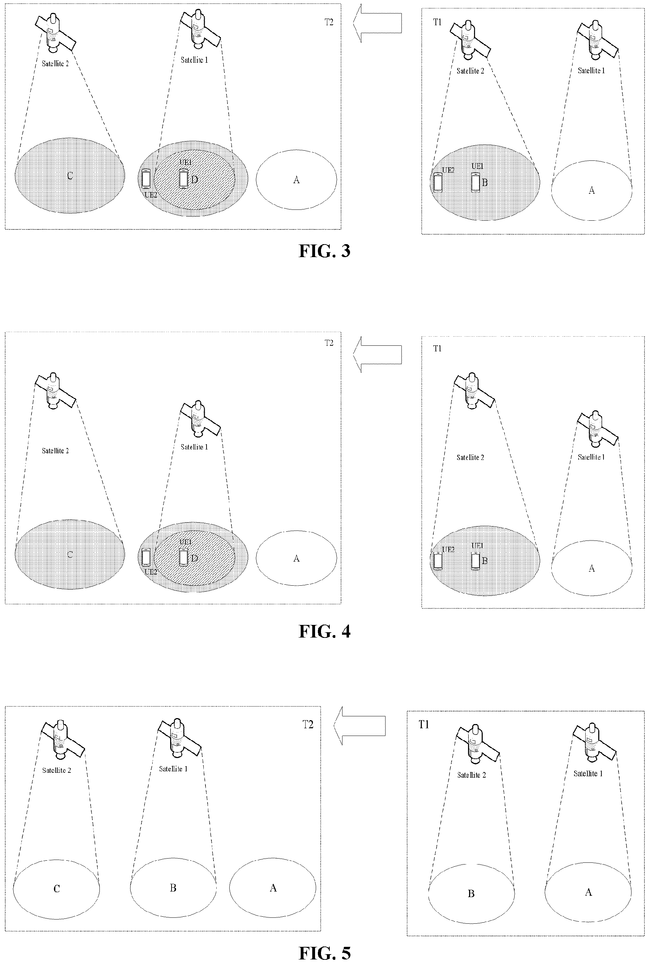

For example, referring to FIG. 3, at moment T1, a coverage area of a cell of satellite 1 is area A, and a coverage area of a cell of satellite 2 is area B, but area A is smaller than area B. At moment T2, the coverage area of the cell of satellite 1 becomes area D, and the coverage area of the cell of satellite 2 becomes area C. Area D and area A are different but have a same coverage size, and the coverage size is smaller than that of area B. For example, at moment T1, both UE1 and UE2 are within the coverage area (area B) of the cell of satellite 2, while UE1 is in a center of the coverage area of the cell of satellite 2 and UE2 is at an edge of the coverage area of the cell of satellite 2. At moment T2, UE1 is located in the coverage area (area D) of the cell of satellite 1, but UE2 is not in the coverage area of the cell of satellite 1. Therefore, if both UE1 and UE2 receive, at moment T1, a service start moment of the cell of satellite 1 from the cell of satellite 2, UE1 can expect a service of the cell of satellite 1 at a broadcast moment. However, for UE2, it is problematic for UE2 to expectthe service start moment of the cell of satellite 1 according to a service start moment of an incoming satellite broadcast by the cell of satellite 2, because the coverage area of the cell of satellite 1 at the service start moment does not include the position of UE1.

In some possible scenarios, satellites with different orbital altitudes may have different coverage sizes. For example, referring to FIG. 4, satellite 2 is a medium earth orbit, MEO, satellite, and satellite 1 is a low earth orbit, LEO, satellite. Generally, a higher satellite orbit indicates a larger ground area that a single satellite can cover. Therefore, the size of the ground coverage area of satellite 2 is generally larger than that of satellite 1. At moment T1, the coverage area of the cell of satellite 1 is area A, and the coverage area of the cell of satellite 2 is area B, but area A is smaller than area B. At moment T2, the coverage area of the cell of satellite 1 becomes area D, and the coverage area of the cell of satellite 2 becomes area C. Area D and area A are different but have a same coverage size, and such coverage size is smaller than that of area B. At moment T1, incoming satellite cells that UE1 and UE2 in area B can expect are different, because when the coverage area of satellite 1 is area D, UE1 is within area D and UE2 is not within area D.

To solve the above problem, in a possible implementation, a service start moment of one or more satellite cells and corresponding coverage area information of the one or more satellite cells are broadcast in the current satellite cell. Therefore, the UE can determine an incoming satellite cell to camp on and a starting moment at which the UE can camp on the incoming satellite cell according to the service start moment of the one or more satellite cells and the corresponding coverage area information of the one or more satellite cells. For example, an overall coverage area of the one or more satellite cells includes at least the coverage area of the current satellite cell.

However, in some possible scenarios, the coverage area of the incoming satellite cell at the service start moment is the same as the coverage area of the current satellite cell. In this case, broadcasting the coverage area information of one or more satellite cells may bring unnecessary system message overheads, decreasing resource utilization.

For example, referring to FIG. 5, at moment T1, the coverage area of the cell of satellite 1 is area A, and the coverage area of the cell of satellite 2 is area B. At moment T2, the coverage area of the cell of satellite 1 changes to area B, and the coverage area of the cell of satellite 2 changes to area C. As can be seen from the above, the coverage area of the cell of satellite 1 at moment T1 is the same as the coverage area of the cell of satellite 2 at moment T2. Therefore, the cell of satellite 2 can broadcast only the service start moment of the cell of satellite 1 to the UEs within the coverage area of the cell of satellite 2, and all UEs under coverage of the cell of satellite 2 can expect the service of the cell of satellite 1 at the same moment.

Therefore, how to indicate the service start moment and the coverage area information of the satellite cell to the UE is worthy of discussion.

In view of the above, an information transmission method and an information transmission apparatus are provided according to embodiments of the present application, which provide implementations for indicating the service start moment and the coverage area information of the satellite cell to the UE, preventing unnecessary system message overheads when some UEs fail to camp on an incoming satellite.

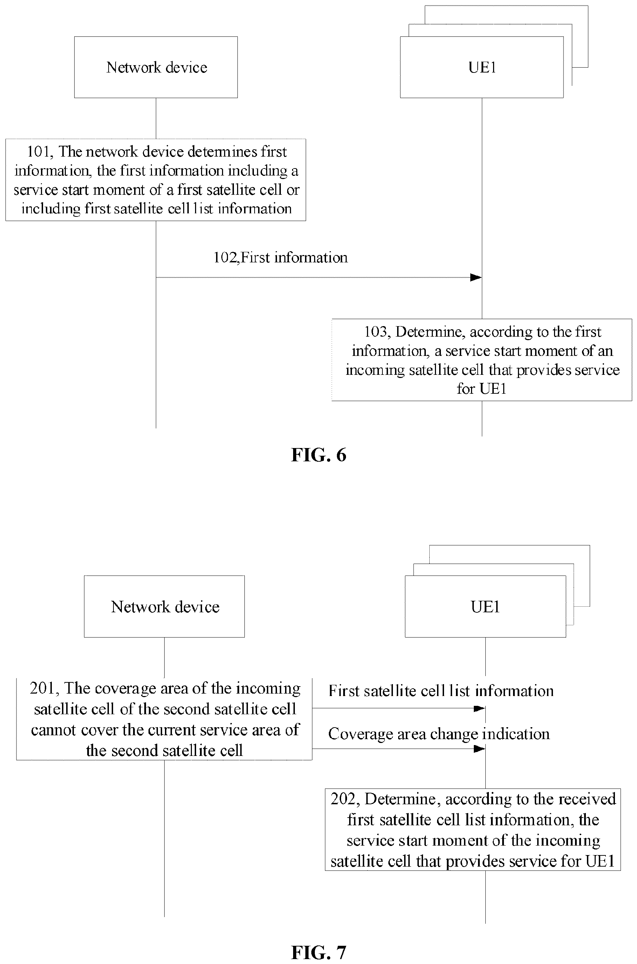

Reference may be made to FIG. 6, which is a schematic flowchart of an information transmission method according to an embodiment of the present application, mainly including the following steps.

In step 101, a network device determines first information, the first information including a service start moment of a first satellite cell or including first satellite cell list information, the first satellite cell list information including a service start moment of at least one satellite cell.

Exemplarily, in a case that the first information includes the service start moment of the first satellite cell, the first satellite cell starts to provide service for a UE within a service area of a second satellite cell from the service start moment. In a case that the first information includes the first satellite cell list information, the at least one satellite cell in the first satellite cell list information starts to provide service for at least one UE within the service area of the second satellite cell from a corresponding service start moment.

It should be understood that the service area of the second satellite cell in the embodiment of the present application indicates a ground coverage area of a currently provided service. For example, a current service area of the second satellite cell is area A1; if at a next moment, the second satellite cell has moved then a coverage area of the second satellite cell becomes area B1. The UE receives the first information when the current service area of the second satellite cell is area A1. Then, "the first satellite cell starts to provide service for the UE within the service area of the second satellite cell from the service start moment" may be understood as that the first satellite cell starts to provide service for the UE within area A1 from the service start moment. In other words, if a moment when the second satellite cell is in area A1 is a current moment, the service start moment of the first satellite cell is a future moment after the current moment.

In step 102, the network device sends the first information to a UE within a service area of a second satellite cell.

Exemplarily, the network device may broadcast the first information through the second satellite cell, or may indicate the first information to the UE within the service area of the second satellite cell in way of other control messages. The following description is based on an example in which the first information is broadcast.

In a possible implementation, the network device, if determining that a first coverage area of the first satellite cell in a satellite communication system covers at least the current service area of the second satellite cell, acquires the service start moment of the first satellite cell, and broadcasts the service start moment of the first satellite cell to the UE within the current service area of the second satellite cell. It may be understood that the first coverage area is an area covered by the first satellite cell at the service start moment. It should be understood that in this case, coverage area information of the first satellite cell is no longer broadcast.

Exemplarily, the network device may be a CN device, a gateway station, or the second satellite cell, which is not specifically limited in the embodiments of the present application.

"A first coverage area of the first satellite cell covers at least the current service area of the second satellite cell" may be understood as that the first coverage area of the first satellite cell includes the current service area of the second satellite cell, or the first coverage area of the first satellite cell is identical to the current service area of the second satellite cell. "The first coverage area of the first satellite cell is identical to the current service area of the second satellite cell" may also be described as that the first coverage area of the first satellite cell completely overlaps with the current service area of the second satellite cell.

"A first coverage area of the first satellite cell covers at least the current service area of the second satellite cell" may alternatively be understood as that the first coverage area of the first satellite cell is greater than or equal to the current service area of the second satellite cell.

In a possible example, the service start moment when the first satellite cell covers the current service area of the second satellite cell is an earliest moment, among service start moments of respective satellite cells included in the satellite communication system, at which the UE can be provided with service. The earliest moment herein is a moment after a start moment at which the second satellite cell provides service. For example, in the satellite communication system, there are multiple satellite cells which can cover the current service area of the second satellite cell in respective periods of time, then, the service start moment of the second satellite cell is the earliest moment of the respective periods of time during which the multiple satellite cells cover the current service area of the second satellite cell. For example, the satellite communication system includes two satellite cells capable of covering the current service area of the second satellite cell, which are satellite cell 1 and satellite cell 2 respectively. At moment t1, satellite cell 1 covers the current service area of second satellite cell, and at moment t2, satellite cell 2 covers the current service area of the second satellite cell . For example, if t1<t2 (for example, moment t1 comes first), the network device may broadcast the service start moment of satellite cell 1.

In another possible example, in a case that coverage areas respectively corresponding to multiple satellite cells in the satellite communication system can cover the current service area of the second satellite cell, the network device may broadcast service start moments respectively corresponding to the multiple satellite cells. For example, the satellite communication system includes two satellite cells capable of covering the current service area of the second satellite cell, which are satellite cell 1 and satellite cell 2 respectively. Satellite cell 1 covers the current service area of the second satellite cell at moment t1 and satellite cell 2 covers the current service area of the second satellite cell at moment t2. The network device may broadcast the service start moment of satellite cell 1 and the service start moment of satellite cell 2.

In some embodiments, the network device may further broadcast a service end moment of the second satellite cell to UE(s) within the current service area of the second satellite cell.

A UE within the current service area of the second satellite cell, after receiving the service start moment of the first satellite cell, may know that the coverage area of the first satellite cell at the service start moment covers the current service area of the second satellite cell providing the current service. In the following description, UE1 within the current service area of the second satellite cell is taken as an example.

In another possible implementation, the network device, upon determining that a coverage area of an incoming satellite cell of the second satellite cell cannot cover the current service area of the second satellite cell, acquires the first satellite cell list information and broadcasts the first satellite cell list information to the UE within the current service area of the second satellite cell. "A coverage area of an incoming satellite cell of the second satellite cell cannot cover the current service area of the second satellite cell" may also be understood as that the satellite communication system does not include a satellite cell whose coverage area includes the current service area of the second satellite cell.

The first satellite cell list information includes a service start moment of at least one satellite cell. The first satellite cell list information may further include coverage area information of the at least one satellite cell. The coverage area information may include one or more of ephemeris information, elevation angle information, and wave-velocity information. The ephemeris information may include an angle of inclination of an orbital plane of a satellite, a right ascension of an ascending node, a semi-major axis of an orbital ellipse, an eccentricity of the orbital ellipse, an angular distance of a perigee, a moment at which the satellite passes the perigee, and the like.

The UE within the current service area of the second satellite cell, after receiving the first satellite cell list information, may know that coverage areas of respective satellite cells in a serving cell list cannot completely cover the current service area of the second satellite cell providing the current service. In the following description, UE1 within the current service area of the second satellite cell is taken as an example.

In step 103, UE1 receives the first information, and determines, according to the first information, a service start moment of an incoming satellite cell that provides service for UE1.

In a possible implementation, if UE1 receives the service start moment of the first satellite cell, UE1 may determine that the first satellite cell is the incoming satellite cell and a moment at which UE1 is provided with service is the service start moment of the first satellite cell. The incoming satellite cell to provide service for UE1 may also be understood as an incoming satellite cell that UE1 is to camp on, or referred to as an incoming satellite cell.

In some embodiments, in a case that the network device broadcasts service start moments of multiple satellite cells including the first satellite cell, the UE1 may select, according to the service start moments of the multiple satellite cells, an incoming satellite cell from the multiple satellite cells to provide service for UE1. Herein, a coverage area of each of the multiple satellite cells including the first satellite cell at a respective corresponding service start moment can cover the current service area of the second satellite cell. For example, the satellite communication system includes two satellite cells capable of covering the current service area of the second satellite cell, which aresatellite cell 1 and satellite cell 2 respectively. At moment t1, satellite cell 1 covers the current service area of the second satellite cell, and at moment t2, satellite cell 2 covers the current service area of the second satellite cell. The network device broadcasts the service start moment of satellite cell 1 and the service start moment of satellite cell 2. Then, UE1 may select one satellite cell from satellite cell 1 and satellite cell 2 as the incoming satellite cell to provide service for UE1. No specific selection manner is limited in the present application.

In another possible implementation, after receiving satellite cell list information, UE1 determines, according to the satellite cell list information, a service start moment of an incoming satellite cell that provides service for UE1.

For example, UE1 may select, according to a position of UE1 and coverage area information of at least one satellite cell in the satellite cell list information, one satellite cell capable of covering the position of UE1 as the incoming satellite cell that provides service for UE1. A service start moment of the selected satellite cell is a moment at which service is provided for UE1. For example, if a third satellite cell capable of covering the position of the UE is determined from the first satellite cell list information according to position information of the UE and the coverage area information of the at least one satellite cell at a corresponding service start moment, a service start moment corresponding to the third satellite cell is determined to be the service start moment of the incoming satellite cell that provides service for the UE.

In a possible example, the service start moment of the first satellite cell and the first satellite cell list information may be sent by the network device in an identical information field of an identical type of message. For example, the identical type of message is referred to as a first message. In a case where the first information includes the service start moment of the first satellite cell, a first field in the first message carries the service start moment of the first satellite cell. In another example, in a case where the first information includes the first satellite cell list information, the first field in the first message carries the first satellite cell list information. The first field may also be referred to as a serving cell information field, or as something else, which is not specifically limited in the embodiments of the present application. As an example, the first message may be a system message. That is, the serving cell information field may be located in the system message. For example, when the network device sends the service start moment, the service start information may be carried in the serving cell information field in the system message. Alternatively, in some scenarios, when the network device is required to send the first satellite cell list information, the first satellite cell list information may be carried in the serving cell information field in the system message. For UE1, if UE1 determines that the serving cell information field includes only one record, the record being a piece of time information which is parsed from the serving cell information field, the UE determines that the time information records the service start moment of the incoming satellite cell that provides service for UE1. If one or more service start moments and coverage area information are parsed from the serving cell information field, it may be determined that the serving cell information field carries the first satellite cell list information, and then the service start moment of the incoming satellite cell that provides service for UE1 is determined according to the one or more service start moments and the coverage area information.

In another possible example, the network device sends the service start moment of the first satellite cell and the satellite cell list information through separate information fields, which, for example, may be sent through different types of messages, or sent through different fields of an identical type of message. For example, the identical type of message is referred to as a second message. In a case where the first information includes the service start moment of the first satellite cell, a second field in the second message carries the service start moment of the first satellite cell. In another example, in a case where the first information includes the first satellite cell list information, a third field in the second message carries the first satellite cell list information. Therefore, if UE1 acquires the service start moment of the first satellite cell from the second field, the service start moment of the first satellite cell is determined to be the service start moment of the incoming satellite cell. If UE1 acquires the first satellite cell list information from the third field, the service start moment of the incoming satellite cell is determined according to the second satellite cell list information.

In a possible implementation, in a case that the first information includes the service start moment of the first satellite cell, the network device may further broadcast a coverage area change indication to the UE. The coverage area change indication is used to indicate that a coverage area of an incoming satellite cell of the second satellite cell cannot cover the current service area of the second satellite cell. For example, if the network device determines that the coverage area of the incoming satellite cell of the second satellite cell cannot cover the current service area of the second satellite cell, the network device broadcasts the first satellite cell list information to the UE in the current service area of the second satellite cell and also broadcasts the coverage area change indication. Reference may be made to step 201 shown in FIG. 7. It may be understood that the coverage area change indication is used to inform the UE in the current service area of the second satellite cell that the coverage area of the incoming satellite cell is different from a coverage area of the currently serving satellite cell.

If UE1 receives the coverage area change indication, the UE can know that the coverage area of the incoming satellite cell is different from the coverage area of the currently serving satellite cell, and may determine, according to the received first satellite cell list information, a service start moment of an incoming satellite cell that provides service for UE1, referring to step 202 in FIG. 7.

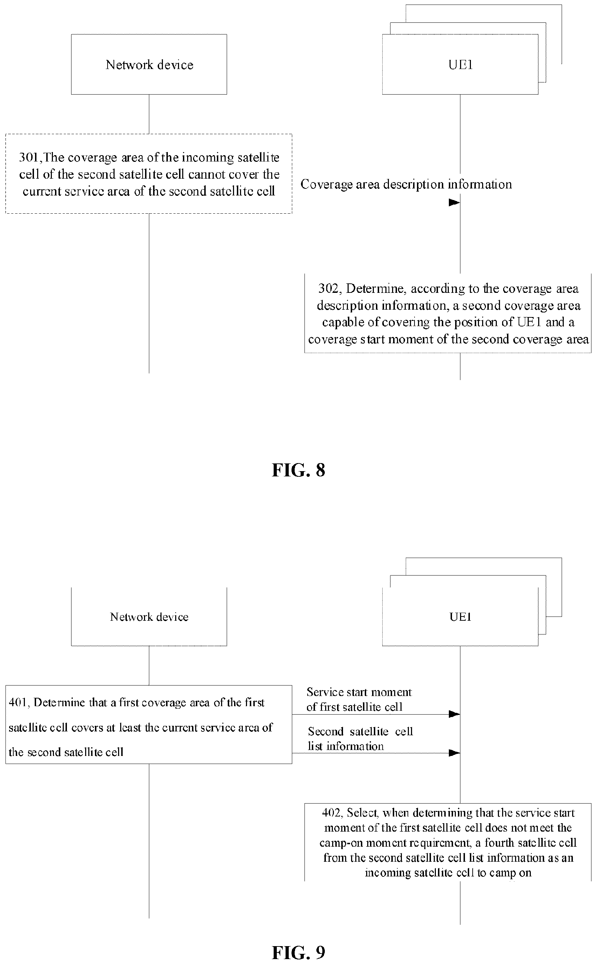

In another possible implementation, if the coverage area of the incoming satellite cell of the second satellite cell cannot cover the current service area of the second satellite cell, coverage area description information may further be broadcast to the UE in the current service area of the second satellite cell. The coverage area description information includes a coverage start moment corresponding to at least one coverage area and coverage information of the at least one coverage area at the corresponding coverage start moment. For example, the network device broadcasts the coverage area description information upon determining that the coverage area of the incoming satellite cell of the second satellite cell cannot cover the current service area of the second satellite cell, referring to step 301 shown in FIG. 8. Exemplarily, the coverage information may include reference point information, or include reference point information and a coverage radius. A coverage may alternatively be expressed in other ways, such as latitude and longitude ranges.

UE1 within the current service area of the second satellite cell is still taken as an example. Referring to step 302 in FIG. 8, UE1, upon receiving the coverage area description information, may determine, according to the coverage area description information, a second coverage area capable of covering the position of UE1 and a coverage start moment of the second coverage area. In a possible example, UE1 determines, according to the first satellite cell list information, an incoming satellite cell to camp on and a service start moment of the incoming satellite cell to camp on. The coverage area description information may be ignored if the determined service start moment can satisfy a camp-on moment requirement. Alternatively, in another possible example, if the determined service start moment cannot meet the camp-on moment requirement, an incoming coverage area that can provide service for UE1 and a corresponding coverage start moment may be determined from the coverage area description information. In yet another possible example, UE1 determines, according to the first satellite cell list information, an incoming satellite cell to camp on and a service start moment of the incoming satellite cell to camp on. Then, a coverage area that can subsequently provide service for UE1 and a corresponding coverage start moment can further be determined according to the coverage area description information. Through the above solution, the UE can know when there is a coverage area or a satellite cell that can provide service for the UE, thereby reducing unnecessary searches for satellite cells and reducing a waste of resources.

In yet another possible implementation, when it is determined that the coverage area of the incoming satellite cell of the second satellite cell cannot cover the current service area of the second satellite cell, the network device may broadcast the first satellite cell list information, the coverage area change indication, and the coverage area description information to the UE within the current service area of the second satellite cell. Then, the UE within the current service area of the second satellite cell may acquire, according to the coverage area change indication, the first satellite cell list information and/or the coverage area description information from a received signal.

In some possible embodiments, in a case where the acquired first information includes the service start moment of the first satellite cell, the network device, when broadcasting the service start moment of the first satellite cell to the UE within the current service area of the second satellite cell, may further broadcast second satellite cell list information, referring to step 401 shown in FIG. 9 for example. The second satellite cell list information includes at least one satellite cell whose service start moment is earlier than the service start moment of the first satellite cell. Further, UE1 within the current service area of the second satellite cell is taken as an example. UE1 further receives, when receiving the service start moment of the first satellite cell, the second satellite cell list information. The second satellite cell list information includes at least one satellite cell whose service start moment is earlier than the service start moment of the first satellite cell. In some embodiments, UE1 selects, when determining that the service start moment of the first satellite cell does not meet the camp-on moment requirement, a fourth satellite cell from the second satellite cell list information as an incoming satellite cell to camp on. Refer to step 402 in FIG. 9, for example. A coverage area of the fourth satellite cell at a service start moment includes the position of the UE, and the service start moment of the fourth satellite cell is earlier than the service start moment of the first satellite cell. In some other embodiments, if the service start moment of the first satellite cell meets the camp-on moment requirement, the second satellite cell list information may be ignored. It may be understood that "the service start moment of the first satellite cell does not meet the camp-on moment requirement" may include the service end moment of the second satellite cell being earlier than the service start moment of the first satellite cell. In some other embodiments, UE1 determines, according to the second satellite cell list information, whether there is a satellite cell which is capable of covering the position of UE1 and has a service start moment earlier than the service start moment of the first satellite cell. If there is not such satellite cell, the first satellite cell may be taken as the incoming satellite cell. The service start moment of the first satellite cell is the moment at which service is provided for UE1.

In the embodiments of the present application, content to be broadcast is determined based on a relationship between a coverage area of a current serving satellite cell and a coverage area of a determined incoming satellite cell, so that unnecessary signaling overheads can be reduced and resource utilization efficiency is improved. The UE may parse the broadcast content according to the broadcast content and an requirement of the UE itself, reducing unnecessary operations, thereby reducing power consumption of the UE.

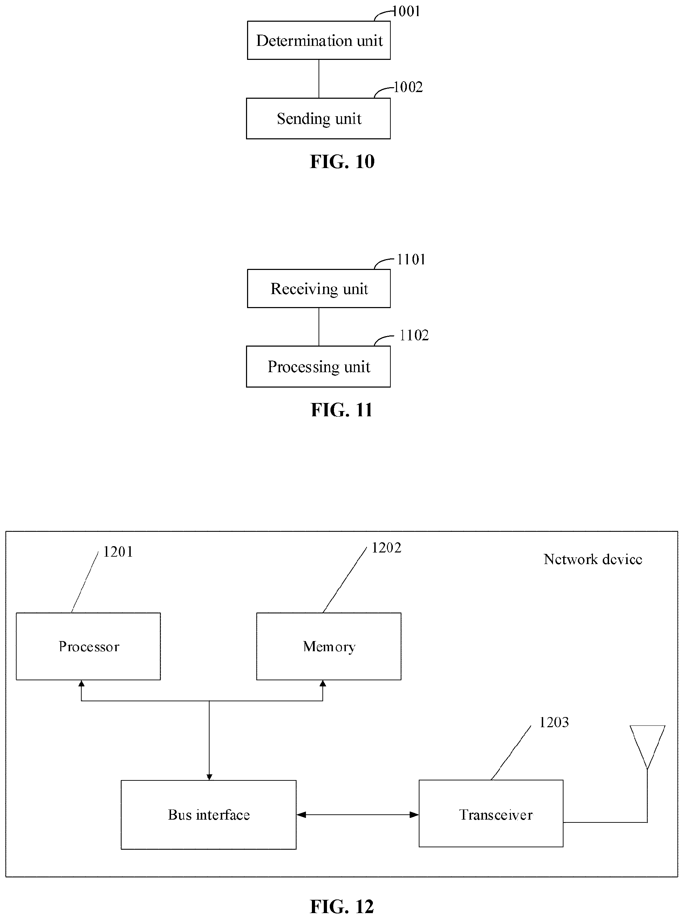

Based on a same inventive concept, the present application further provides an information transmission apparatus, applied to a network device. Referring to FIG. 10, the apparatus includes a determination unit 1001 and a sending unit 1002.

The determination unit 1001 is arranged to determine first information. The first information includes a service start moment of a first satellite cell or includes first satellite cell list information. The first satellite cell list information includes a service start moment of at least one satellite cell.

The sending unit 1002 is arranged to send the first information to a UE within a current service area of a second satellite cell.

In a possible implementation, a first coverage area of the first satellite cell covers at least the service area of the second satellite cell, the first coverage area being an area that the first satellite cell starts to cover from the service start moment; or
the first satellite cell list information further includes coverage area information of the at least one satellite cell at a corresponding service start moment, and a coverage area of the at least one satellite cell included in the first satellite cell list information overlaps with the current service area of the second satellite cell.

In a possible implementation, the first satellite cell is a satellite cell, in a satellite communication system to which the network device belongs, capable of earliest providing service for the UE.

In a possible implementation, the first information includes the first satellite cell list information, and the sending unit 1002 is further arranged to broadcast a coverage area change indication to the UE. The coverage area change indication is used to indicate that a coverage area of an incoming satellite cell of the second satellite cell in a satellite communication system to which the network device belongs is different from the service area of the second satellite cell.

In a possible implementation, the sending unit 1002 is specifically arranged to:
send a first message to the UE within the service area of the second satellite cell, a first field in the first message carrying the service start moment of the first satellite cell; or
send a first message to the UE within the service area of the second satellite cell, a first field in the first message carrying the first satellite cell list information.

In a possible implementation, the sending unit 1002 is specifically arranged to:
send a second message to the UE within the service area of the second satellite cell, a second field in the second message carrying the service start moment of the first satellite cell; or
send a second message to the UE within the service area of the second satellite cell, a third field in the second message carrying the first satellite cell list information.

In a possible implementation, the first information includes a service start moment of the first satellite cell, and the sending unit 1002 is further arranged to send second satellite cell list information to the UE within the current service area of the second satellite cell. The second satellite cell list information includes a service start moment of at least one satellite cell and coverage area information of the at least one satellite cell. A coverage area of the at least one satellite cell included in the second satellite cell list information overlaps with the service area of the second satellite cell. The second satellite cell list information includes at least one satellite cell whose service start moment is earlier than the service start moment of the first satellite cell.

Based on a same inventive concept, the present application further provides an information transmission apparatus, applied to a UE. The UE is located within a current service area of a second satellite cell. Referring to FIG. 11, the apparatus includes a receiving unit 1101 and a processing unit 1102.

The receiving unit 1101 is arranged to receive first information. The first information includes a service start moment of a first satellite cell or includes first satellite cell list information. The first satellite cell list information includes a service start moment of at least one satellite cell.

The processing unit 1102 is arranged to determine, according to the first information, a service start moment of an incoming satellite cell that provides service for the UE.

In a possible implementation, the first information includes the service start moment of the first satellite cell, and the processing unit 1102 is specifically arranged to determine the service start moment of the first satellite cell to be the service start moment of the incoming satellite cell that provides service for the UE.

In a possible implementation, the first information includes the first satellite cell list information, the first satellite cell list information further includes coverage area information of the at least one satellite cell at a corresponding service start moment, and the processing unit 1102 is specifically arranged to: determine, from the first satellite cell list information according to position information of the UE and the coverage area information of the at least one satellite cell at the corresponding service start moment, a third satellite cell capable of covering a position of the UE; and determine a service start moment corresponding to the third satellite cell to be the service start moment of the incoming satellite cell that provides service for the UE.

In a possible implementation, the first satellite cell is a satellite cell, in a satellite communication system to which the UE belongs, capable of earliest providing service for the UE.

In a possible implementation, before the service start moment corresponding to the third satellite cell is determined to be the service start moment of the incoming satellite cell that provides service for the UE, the receiving unit 1101 is further arranged to receive a coverage area change indication broadcast by a network device. The coverage area change indication is used to indicate that a coverage area of an incoming satellite cell of the second satellite cell in a satellite communication system to which the UE belongs is different from the service area of the second satellite cell.

In a possible implementation, the receiving unit 1101 is specifically arranged to receive a first message, and the processing unit 1102 acquires the first information from a first field of the first message.

In a possible implementation, the receiving unit 1101 receives a second message, and the processing unit 1102 acquires the service start moment of the first satellite cell from a second field of the second message.

In a possible implementation, in a case where the first information includes the first satellite cell list information, the receiving unit 1101 receives a second message, and the processing unit 1102 acquires the first satellite cell list information from a second field of the second message.

In a possible implementation, the receiving unit 1101 is further arranged to further receive second satellite cell list information when receiving the service start moment of the first satellite cell. The second satellite cell list information includes a service start moment of at least one satellite cell and coverage area information of the at least one satellite cell. A coverage area of the at least one satellite cell included in the second satellite cell list information overlaps with the service area of the second satellite cell. The first satellite cell list information includes at least one satellite cell whose service start moment is earlier than the service start moment of the first satellite cell. The processing unit 1102 selects, upon determining that the service start moment of the first satellite cell does not meet a camp-on moment requirement, a fourth satellite cell from the second serving cell list as the incoming satellite cell that provides service for the UE. A coverage area of the fourth satellite cell at a service start moment includes the position of the UE, and the service start moment of the fourth satellite cell is earlier than the service start moment of the first satellite cell.

Based on a same inventive concept, a network device is further provided according to an embodiment of the present application. The network device can perform the information transmission method implemented by the network device in any one of the above embodiments.

FIG. 12 is a schematic structural diagram of the network device according to the embodiment of the present application, that is, another schematic structural diagram of the network device. As shown in FIG. 12, the network device includes a processor 1201, a memory 1202, and a transceiver 1203.

The processor 1201 is responsible for managing a bus architecture and general processing. The memory 1202 may store data used by the processor 1201 when performing an operation. The transceiver 1203 is arranged to receive and send data under control of the processor 1201.

The bus architecture may include any quantity of interconnected buses and bridges, and specifically links circuits such as one or more processors represented by the processor 1201 and one or more memories represented by the memory 1202 together. The bus architecture may further link various other circuits such as a peripheral device, a voltage regulator, and a power management circuit together, which are well known in the art, and therefore, no further description is provided therein. A bus interface provides an interface. The processor 1201 is responsible for managing the bus architecture and general processing. The memory 1202 may store data used by the processor 1201 when performing an operation.

The process disclosed in the embodiments of the present application may be applied to the processor 1201 or implemented by the processor 1201. During the implementation, each step of a signal processing flow may be completed by using an integrated logical circuit of hardware or an instruction in a software form in the processor 1201. The processor 1201 may be a general-purpose processor, a digital signal processor, an application-specific integrated circuit, a field programmable gate array or another programmable logical device, a discrete gate or a transistor logical device, or a discrete hardware component, which may implement or perform the methods, steps, and logical block diagrams disclosed in the embodiments of the present application. The general-purpose processor may be a microprocessor or any conventional processor or the like. With reference to the methods disclosed in the embodiments of the present application, steps may be represented directly as being implemented by a hardware processor, or implemented by a combination of hardware and software modules in a processor. The software module may be located in a storage medium mature in the art, such as a random access memory, a flash memory, a read-only memory, a programmable read-only memory, an electrically erasable programmable memory, or a register. The storage medium is located in the memory 1202, and the processor 1201 reads information in the memory 1202 and completes the steps of the signal processing flow in combination with hardware thereof.

Specifically, the processor 1201 is configured to read a computer program in the memory 1202. The processor 1201, when executing the computer program, implements the steps implemented by the network device in any one of the embodiments in FIG. 6 to FIG. 9. For example,
the processor 1201 is configured to: determine first information, the first information including a service start moment of a first satellite cell or including first satellite cell list information, the first satellite cell list information including a service start moment of at least one satellite cell; and send, through the transceiver 1203, the first information to a UE within a current service area of a second satellite cell.

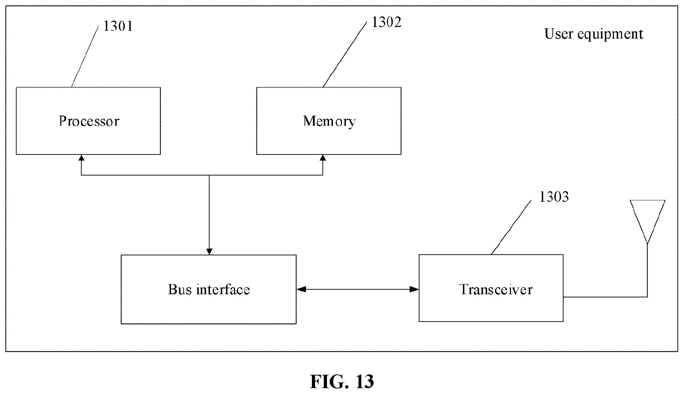

Based on a same inventive concept, a UE is further provided according to an embodiment of the present application. The UE can perform the information transmission method implemented by the UE in any one of the above embodiments. FIG. 13 is a schematic structural diagram of the UE according to the embodiment of the present application, that is, another schematic structural diagram of the UE. As shown in FIG. 13, the UE includes a processor 1301, a memory 1302, and a transceiver 1303.

The processor 1301 is responsible for managing a bus architecture and general processing. The memory 1302 may store data used by the processor 1301 when performing an operation. The transceiver 1303 is arranged to receive and send data under control of the processor 1301.

The bus architecture may include any quantity of interconnected buses and bridges, and specifically links circuits such as one or more processors represented by the processor 1301 and one or more memories represented by the memory 1302 together. The bus architecture may further link various other circuits such as a peripheral device, a voltage regulator, and a power management circuit together, which are well known in the art, and therefore, no further description is provided therein. A bus interface provides an interface. The processor 1301 is responsible for managing the bus architecture and general processing. The memory 1302 may store data used by the processor 1301 when performing an operation.

The process disclosed in the embodiments of the present application may be applied to the processor 1301 or implemented by the processor 1301. During the implementation, each step of a signal processing flow may be completed by using an integrated logical circuit of hardware or an instruction in a software form in the processor 1301. The processor 1301 may be a general-purpose processor, a digital signal processor, an application-specific integrated circuit, a field programmable gate array or another programmable logical device, a discrete gate or a transistor logical device, or a discrete hardware component, which may implement or perform the methods, steps, and logical block diagrams disclosed in the embodiments of the present application. The general-purpose processor may be a microprocessor or any conventional processor or the like. With reference to the methods disclosed in the embodiments of the present application, steps may be represented directly as being implemented by a hardware processor, or implemented by a combination of hardware and software modules in a processor. The software module may be located in a storage medium mature in the art, such as a random access memory, a flash memory, a read-only memory, a programmable read-only memory, an electrically erasable programmable memory, or a register. The storage medium is located in the memory 1302, and the processor 1301 reads information in the memory 1302 and completes the steps of the signal processing flow in combination with hardware thereof.

Specifically, the processor 1301 is configured to read a computer program in the memory 1302. The processor 1301, when executing the computer program, implements the steps implemented by the UE in any one of the embodiments in FIG. 4 to FIG. 9. For example,
the processor 1301 is configured to: receive first information through the transceiver 1303, the first information including a service start moment of a first satellite cell or including first satellite cell list information, the first satellite cell list information including a service start moment of at least one satellite cell; and determine, according to the first information, a service start moment of an incoming satellite cell that provides service for the UE.

Those skilled in the art should understand that the embodiments of the present application may be provided as a method, a system, or a computer program product. Therefore, the present application may adopt a form of hardware only embodiments, software only embodiments, or embodiments with a combination of software and hardware. In addition, the present application may adopt a form of a computer program product that is implemented on one or more computer-usable storage media (including, but not limited to, a disk memory, a compact disc read-only memory, CD-ROM, an optical memory, and the like) that include computer-usable program code.

The present application is described with reference to the flowcharts and/or block diagrams of the method, the device (system), and the computer program product according to the embodiments of the present application. It should be understood that computer program instructions may be used to implement each process and/or each block in the flowcharts and/or the block diagrams and a combination of a process and/or a block in the flowcharts and/or the block diagrams. These computer program instructions may be provided to a processor of a general-purpose computer, a special-purpose computer, an embedded processor, or another programmable data processing device to generate a machine, so that an instruction that is executed by a processor of a computer or another programmable data processing device generates an apparatus configured to implement a specified function in one or more processes in the flowcharts and/or in one or more blocks in the block diagrams.

These computer program instructions may alternatively be stored in a computer-readable memory that can instruct the computer or the another programmable data processing device to operate in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Obviously, those skilled in the art can make various modifications and variations to the present application without departing from the spirit and scope of the present application. If these modifications and variations of the present application fall within the scope of the claims of the present application and equivalent technologies thereof, the present application is also intended to cover these modifications and variations.

## Claims

1. An information transmission method, applied to a user equipment, UE, located within a service area of a second satellite cell, **characterized by** comprising:
receiving first information, the first information comprising a service start moment of a first satellite cell or comprising first satellite cell list information, the first satellite cell list information comprising a service start moment of at least one satellite cell; and
determining, according to the first information, a service start moment of an incoming satellite cell that provides service for the UE.

2. The information transmission method according to claim 1, wherein the first information comprises the service start moment of the first satellite cell, and the determining, according to the first information, the service start moment of the incoming satellite cell that provides service for the UE comprises:
determining the service start moment of the first satellite cell to be the service start moment of the incoming satellite cell that provides service for the UE.

3. The information transmission method according to claim 1, wherein the first information comprises the first satellite cell list information, the first satellite cell list information further comprises coverage area information of the at least one satellite cell at a corresponding service start moment, and the determining, according to the first information, the service start moment of the incoming satellite cell that provides service for the UE comprises:
determining, from the first satellite cell list information according to position information of the UE and the coverage area information of the at least one satellite cell at the corresponding service start moment, a third satellite cell capable of covering a position of the UE; and
determining a service start moment corresponding to the third satellite cell to be the service start moment of the incoming satellite cell that provides service for the UE.

4. The information transmission method according to claim 1 or 2, wherein the first satellite cell is a satellite cell, in a satellite communication system to which the UE belongs, capable of earliestly providing service for the UE.

5. The information transmission method according to claim 3, wherein prior to the determining the service start moment corresponding to the third satellite cell to be the service start moment of the incoming satellite cell that provides service for the UE, the information transmission method further comprises:
receiving a coverage area change indication, the coverage area change indication being configured to indicate that a coverage area of the incoming satellite cell in a satellite communication system to which the UE belongs is different from the service area of the second satellite cell.

6. The information transmission method according to claim 1 or 2, wherein the receiving the first information comprises:
receiving a first message, and acquiring the first information from a first field of the first message.

7. The information transmission method according to claim 1 or 2, wherein the receiving the first information comprises:
receiving a second message, and acquiring the service start moment of the first satellite cell from a second field of the second message; or
receiving a second message, and acquiring the first satellite cell list information from a second field of the second message.

8. The information transmission method according to claim 3 or 5, wherein the first information comprises the service start moment of the first satellite cell, and the information transmission method further comprises:
receiving second satellite cell list information, the second satellite cell list information comprising a service start moment of at least one satellite cell and coverage area information of the at least one satellite cell; wherein a coverage area of the at least one satellite cell comprised in the second satellite cell list information overlaps with the service area of the second satellite cell, and the first satellite cell list information comprises at least one satellite cell whose service start moment is earlier than the service start moment of the first satellite cell; and
selecting, in response to determining that the service start moment of the first satellite cell does not meet a camp-on moment requirement, a fourth satellite cell from a second serving cell list as the incoming satellite cell that provides service for the UE;
wherein a coverage area of the fourth satellite cell at a service start moment comprises the position of the UE, and the service start moment of the fourth satellite cell is earlier than the service start moment of the first satellite cell.

9. The information transmission method according to claim 1, wherein the first satellite cell list information further comprises coverage area information of the at least one satellite cell, the coverage area information comprising ephemeris information and/or elevation angle information.

10. The information transmission method according to claim 1, wherein the first satellite cell list information comprises the service start moment of only one satellite cell.

11. The information transmission method according to claim 10, wherein the determining, according to the first information, the service start moment of the incoming satellite cell that provides service for the UE comprises:
determining the service start moment of the one satellite cell to be the service start moment of the incoming satellite cell that provides service for the UE.

12. An information transmission method, applied to a network device, **characterized by** comprising:
determining first information, the first information comprising a service start moment of a first satellite cell or comprising first satellite cell list information, the first satellite cell list information comprising a service start moment of at least one satellite cell; and
sending the first information to a user equipment, UE, within a service area of a second satellite cell.

13. The information transmission method according to claim 12, wherein a first coverage area of the first satellite cell covers at least the service area of the second satellite cell, the first coverage area being an area that the first satellite cell starts to cover from the service start moment; or
the first satellite cell list information further comprises coverage area information of the at least one satellite cell at a corresponding service start moment, and a service area of the at least one satellite cell comprised in the first satellite cell list information overlaps with the service area of the second satellite cell.

14. The information transmission method according to claim 12 or 13, wherein the first satellite cell is a satellite cell, in a satellite communication system to which the network device belongs, capable of earliestly providing service for the UE.

15. The information transmission method according to claim 12 or 13, wherein the first information comprises the first satellite cell list information, and the information transmission method further comprises:
broadcasting a coverage area change indication to the UE; the coverage area change indication being configured to indicate that a coverage area of an incoming satellite cell in a satellite communication system to which the network device belongs is different from the service area of the second satellite cell.

16. The information transmission method according to claim 12 or 13, wherein the sending the first information to the UE within the service area of the second satellite cell comprises:
sending a first message to the UE within the service area of the second satellite cell, a first field in the first message carrying the service start moment of the first satellite cell; or
sending a first message to the UE within the service area of the second satellite cell, a first field in the first message carrying the first satellite cell list information.

17. The information transmission method according to claim 12 or 13, wherein the sending the first information to the UE within the service area of the second satellite cell comprises:
sending a second message to the UE within the service area of the second satellite cell, a second field in the second message carrying the service start moment of the first satellite cell; or
sending a second message to the UE within the service area of the second satellite cell, a third field in the second message carrying the first satellite cell list information.

18. The information transmission method according to claim 12 or 13, wherein the first information comprises the service start moment of the first satellite cell, and the information transmission method further comprises:
sending second satellite cell list information to the UE within the service area of the second satellite cell;
wherein the second satellite cell list information comprises a service start moment of at least one satellite cell and coverage area information of the at least one satellite cell; a coverage area of the at least one satellite cell comprised in the second satellite cell list information overlaps with the service area of the second satellite cell; and the second satellite cell list information comprises at least one satellite cell whose service start moment is earlier than the service start moment of the first satellite cell.

19. The information transmission method according to claim 12, wherein the first satellite cell list information further comprises coverage area information of the at least one satellite cell, the coverage area information comprising ephemeris information and/or elevation angle information.

20. The information transmission method according to claim 12, wherein the first satellite cell list information comprises the service start moment of only one satellite cell.

21. A user equipment, UE, wherein the UE is located within a service area of a second satellite cell, and the UE comprises a transceiver, a processor, and a memory communicatively connected to the processor; **characterized in that** the memory stores instructions executable by the processor, and the processor, when executing the instructions, perform:
receiving first information through the transceiver, the first information comprising a service start moment of a first satellite cell or comprising first satellite cell list information, the first satellite cell list information comprising a service start moment of at least one satellite cell; and
determining, according to the first information, a service start moment of an incoming satellite cell that provides service for the UE.

22. The UE according to claim 21, wherein the first information comprises the service start moment of the first satellite cell, and the processor is configured to:
determine the service start moment of the first satellite cell to be the service start moment of the incoming satellite cell that provides service for the UE.

23. The UE according to claim 21, wherein the first information comprises the first satellite cell list information, the first satellite cell list information further comprises coverage area information of the at least one satellite cell at a corresponding service start moment, and the processor is configured to:
determine, from the first satellite cell list information according to position information of the UE and the coverage area information of the at least one satellite cell at the corresponding service start moment, a third satellite cell capable of covering a position of the UE; and
determine a service start moment corresponding to the third satellite cell to be the service start moment of the incoming satellite cell that provides service for the UE.

24. The UE according to claim 21 or 22, wherein the first satellite cell is a satellite cell, in a satellite communication system to which the UE belongs, capable of earliestly providing service for the UE.

25. The UE according to claim 23, wherein the processor is further configured to receive, prior to determining the service start moment corresponding to the third satellite cell to be the service start moment of the incoming satellite cell that provides service for the UE, a coverage area change indication through the transceiver, the coverage area change indication being configured to indicate that a coverage area of the incoming satellite cell in a satellite communication system to which the UE belongs is different from the service area of the second satellite cell.

26. The UE according to claim 21 or 22, wherein the processor is configured to:
receive a first message through the transceiver, and acquire the first information from a first field of the first message.

27. The UE according to claim 21 or 22, wherein the processor is configured to:
receive a second message through the transceiver, and acquire the service start moment of the first satellite cell from a second field of the second message; or
receive a second message through the transceiver, and acquire the first satellite cell list information from a second field of the second message.

28. The UE according to claim 22 or 25, wherein the first information comprises the service start moment of the first satellite cell, and the transceiver is further configured to receive second satellite cell list information, the second satellite cell list information comprising a service start moment of at least one satellite cell and coverage area information of the at least one satellite cell; wherein a coverage area of the at least one satellite cell comprised in the second satellite cell list information overlaps with the service area of the second satellite cell, and the first satellite cell list information comprises at least one satellite cell whose service start moment is earlier than the service start moment of the first satellite cell; and the processor is further configured to select, in response to determining that the service start moment of the first satellite cell does not meet a camp-on moment requirement, a fourth satellite cell from the second serving cell list as the incoming satellite cell that provides service for the UE;
wherein a coverage area of the fourth satellite cell at a service start moment comprises the position of the UE, and the service start moment of the fourth satellite cell is earlier than the service start moment of the first satellite cell.

29. The UE according to claim 21, wherein the first satellite cell list information further comprises coverage area information of the at least one satellite cell, the coverage area information comprising ephemeris information and/or elevation angle information.

30. The UE according to claim 21, wherein the first satellite cell list information comprises the service start moment of only one satellite cell.

31. The UE according to claim 30, wherein the processor is configured to:
determine the service start moment of the one satellite cell to be the service start moment of the incoming satellite cell that provides service for the UE.

32. A network device, comprising a transceiver, a processor, and a memory communicatively connected to the processor; **characterized in that** the memory stores instructions executable by the processor, and the processor, when executing the instructions, perform:
determining first information, the first information comprising a service start moment of a first satellite cell or comprising first satellite cell list information, the first satellite cell list information comprising a service start moment of at least one satellite cell; and
sending, through the transceiver, the first information to a user equipment, UE, within a service area of a second satellite cell.

33. The network device according to claim 32, wherein a first coverage area of the first satellite cell covers at least the service area of the second satellite cell, the first coverage area being an area that the first satellite cell starts to cover from the service start moment; or the first satellite cell list information further comprises coverage area information of the at least one satellite cell at a corresponding service start moment, and a service area of the at least one satellite cell comprised in the first satellite cell list information overlaps with the service area of the second satellite cell.

34. The network device according to claim 32 or 33, wherein the first satellite cell is a satellite cell, in a satellite communication system to which the network device belongs, capable of earliestly providing service for the UE.

35. The network device according to claim 32 or 33, wherein the first information comprises first satellite cell list information, and the processor is further configured to:
control the transceiver to broadcast a coverage area change indication to the UE; the coverage area change indication being configured to indicate that a coverage area of an incoming satellite cell in a satellite communication system to which the network device belongs is different from the service area of the second satellite cell.

36. The network device according to claim 32 or 33, wherein the processor is configured to:
send, through the transceiver, a first message to the UE within the service area of the second satellite cell, a first field in the first message carrying the service start moment of the first satellite cell; or
send, through the transceiver, a first message to the UE within the service area of the second satellite cell, a first field in the first message carrying the first satellite cell list information.

37. The network device according to claim 32 or 33, wherein the processor is configured to:
send, through the transceiver in a case that the first information comprises the service start moment of the first satellite cell, a second message to the UE within the service area of the second satellite cell, a second field in the second message carrying the service start moment of the first satellite cell; or
send, through the transceiver in a case that the first information comprises the first satellite cell list information, a second message to the UE within the service area of the second satellite cell, a third field in the second message carrying the first satellite cell list information.

38. The network device according to claim 32 or 33, wherein the first information comprises the service start moment of the first satellite cell, and the processor is further configured to:
send, through the transceiver, second satellite cell list information to the UE within the service area of the second satellite cell;
wherein the second satellite cell list information comprises a service start moment of at least one satellite cell and coverage area information of the at least one satellite cell; a coverage area of the at least one satellite cell comprised in the second satellite cell list information overlaps with the service area of the second satellite cell; and the first satellite cell list information comprises at least one satellite cell whose service start moment is earlier than the service start moment of the first satellite cell.

39. The network device according to claim 32, wherein the first satellite cell list information further comprises coverage area information of the at least one satellite cell, the coverage area information comprising ephemeris information and/or elevation angle information.

40. The network device according to claim 32, wherein the first satellite cell list information comprises angle service start moment of only one satellite cell.

41. An information transmission apparatus, applied to a user equipment, UE, located within a service area of a second satellite cell, **characterized by** comprising:
a receiving unit, configured to receive first information, the first information comprising a service start moment of a first satellite cell or comprising first satellite cell list information,
the first satellite cell list information comprising a service start moment of at least one satellite cell; and
a processing unit, configured to determine, according to the first information, a service start moment of an incoming satellite cell that provides service for the UE.

42. An information transmission apparatus, applied to a network device, **characterized by** comprising:
a determination unit, configured to determine first information, the first information comprising a service start moment of a first satellite cell or comprising first satellite cell list information, the first satellite cell list information comprising a service start moment of at least one satellite cell; and
a sending unit, configured to send the first information to a user equipment, UE, within a current service area of a second satellite cell.

43. A computer-readable storage medium, storing computer instructions thereon, **characterized in that** the computer instructions, when executed by a processor, implementing the information transmission method according to any one of claims 1 to 11 or the information transmission method according to any one of claims 12 to 20.
